# EUROPÄISCHE PATENTSCHRIFT

(11) **EP 2 712 506 B1**
(45) Veröffentlichungstag und Bekanntmachung des Hinweises auf die Patenterteilung: **24.08.2016**
(21) Anmeldenummer: 12186106.6
(22) Anmeldetag: 26.09.2012
(51) Int. Cl.: A23G 3/06, A23P 10/25, A21C 3/02

(54) **Walzenformer zum Ausformen eines gleichmäßigen Teppichs aus Süßwarenmasse**
Roller former for forming a uniform slab of confectionary mass
Rouleau de formage destiné à démouler un tapis régulier de masse de confiserie

(43) Veröffentlichungstag der Anmeldung: 02.04.2014
(73) Patentinhaber: Sollich KG, 32105 Bad Salzuflen (DE)
(72) Erfinder: Hagedorn, Udo, 32758 Detmold (DE)
(74) Vertreter: REHBERG HÜPPE + PARTNER

(56) Entgegenhaltungen:
- AT-B- 409 916
- DE-A1- 19 605 566
- FR-A1- 2 513 858
- US-A- 2 446 201
- US-A- 2 783 719

## Beschreibung

### TECHNISCHES GEBIET DER ERFINDUNG

Die Erfindung betrifft eine Vorrichtung zum Ausformen eines Teppichs aus Süßwarenmasse mit einem ersten Spaltbildungselement und einem zweiten Spaltbildungselement. Das zweite Spaltbildungselement ist als rotierend antreibbare Walze mit einer Umfangsfläche und einem ersten Außendurchmesser ausgebildet. Das erste Spaltbildungselement und das zweite Spaltbildungselement sind so ausgebildet und relativ zueinander angeordnet, dass sie einen Spalt bilden, durch den die Süßwarenmasse geführt und dabei die Dicke des Teppichs durch den Spalt festgelegt werden kann. Das zweite Spaltbildungselement ist so ausgebildet, dass der Teppich auf einem Teil der Umfangsfläche des zweiten Spaltbildungselements aufgenommen, mit diesem während der Rotation mitgeführt und von diesem abgenommen werden kann.

Derartige Vorrichtungen werden auch als Walzenformer bezeichnet und stellen im Fachgebiet der Maschinen zum Ausformen eines Teppichs aus Süßwarenmasse eine spezifische Entwicklungsrichtung dar. Davon zu unterscheiden sind Extruder, die Gegenstand einer grundsätzlich anderen Entwicklungsrichtung sind.

Bei den aus dem Teppich herzustellen Produkten kann es sich insbesondere um Riegel, z. B. Cerealien-Riegel, Brittle-Produkte oder Krokant-Produkte usw. handeln.

### NÄCHSTLIEGENDER STAND DER TECHNIK

Eine Vorrichtung zum Ausformen eines Teppichs aus Süßwarenmasse ist aus der deutschen Patentanmeldung DE 10 2004 032 992 A1 bekannt. Die Vorrichtung weist ein erstes Spaltbildungselement und ein zweites Spaltbildungselement auf, die jeweils als eine rotierend antreibbare Walze ausgebildet sind. Das erste Spaltbildungselement besitzt einen kleineren Außendurchmesser als das zweite Spaltbildungselement und ist oberhalb dessen angeordnet ist. Die Spaltbildungselemente bilden einen Spalt, durch den die Süßwarenmasse geführt und dabei die Dicke des Teppichs durch den Spalt festgelegt werden kann. Das zweite Spaltbildungselement ist so ausgebildet, dass der Teppich auf einem Teil seiner Umfangsfläche aufgenommen, mit diesem während der Rotation mitgeführt und von diesem abgenommen werden kann.

Die Vorrichtung weist weiterhin einen Behälter zum Aufnehmen der Süßwarenmasse und zum kontinuierlichen Zuführen der Süßwarenmasse in den Spalt auf. Der Behälter weist bei dieser ersten Ausführungsform zwei feststehende Seitenwände und eine Rückwand auf. Die Rückwand wird durch ein angetriebenes Förderband gebildet. Bei einer anderen zweiten Ausführungsform mit Spaltbildungselementen gleichen Außendurchmessers bilden zwei angetriebene Förderbänder die Stirnwand und die Rückwand des Behälters.

Die Ersetzung mindestens einer Seitenwand des Behälters durch ein Förderband dient dazu, die Süßwarenmasse dem Spalt gleichmäßiger zuzuführen, so dass der hergestellte Teppich ein gleichmäßigeres Gewicht und ein gleichmäßigeres Volumen über die Breite des Teppichs erhält.

Aus dem deutschen Patent DE 10 2004 019 795 B3 ist eine weitere Vorrichtung zum Ausformen eines Teppichs aus Süßwarenmasse bekannt. Die Vorrichtung weist ein erstes Spaltbildungselement und ein zweites Spaltbildungselement auf, die jeweils als eine rotierend antreibbare Walze ausgebildet sind. Das erste Spaltbildungselement besitzt einen kleineren Außendurchmesser als das zweite Spaltbildungselement und ist oberhalb dessen angeordnet ist. Die Spaltbildungselemente bilden einen Spalt, durch den die Süßwarenmasse geführt und dabei die Dicke des Teppichs durch den Spalt festgelegt werden kann. Das zweite Spaltbildungselement ist so ausgebildet, dass der Teppich auf einem Teil seiner Umfangsfläche aufgenommen, mit diesem während der Rotation mitgeführt und von diesem abgenommen werden kann.

Die Vorrichtung weist weiterhin einen Behälter zum Aufnehmen der Süßwarenmasse und zum kontinuierlichen Zuführen der Süßwarenmasse in den Spalt auf. Der Behälter weist feststehende Seitenwände und vermutlich eine ebenfalls feststehende Rückwand auf.

Aus der deutschen Patentanmeldung DE 196 05 566 A1**,** dem US-amerikanischen Patent US 2,783,719 und dem US-amerikanischen Patent US 2,446,201 ist jeweils eine Vorrichtung bekannt, die dazu geeignet ist, einen Teppich aus Süßwarenmasse auszuformen. Die Vorrichtung weist dabei ein erstes und ein zweites Spaltbildungselement auf, die jeweils als Walze ausgebildet sind. Durch die Walzen wird ein Spalt gebildet, in welchem die Dicke der zu behandelnden Süßwarenmasse mittels der Spalthöhe eingestellt wird. Weiterhin weist das zweite Spaltbildungselement an den beiden axial äußeren Bereichen ein mitrotierendes Mitnahmeelement auf, welches einen größeren Außendurchmesser als das zweite Spaltbildungselement besitzt.

### AUFGABE DER ERFINDUNG

Der Erfindung liegt die Aufgabe zugrunde, eine Vorrichtung zum Ausformen eines Teppichs aus Süßwarenmasse bereitzustellen, mit der in effektiver und konstruktiv einfacher Weise ein Teppich ausgeformt werden kann, der eine möglichst konstante Dichte über seine Breite und gleichmäßig geformte Seitenkanten besitzt.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### WEITERER STAND DER TECHNIK

Eine Vorrichtung zum Ausformen eines Teigbands ist aus der österreichischen Patentschrift AT 409916 B bekannt. Die Vorrichtung weist ein erstes Spaltbildungselement und ein zweites Spaltbildungselement auf, die jeweils als eine rotierend antreibbare Walze ausgebildet sind. Die beiden Spaltbildungselemente besitzen den übereinstimmenden Außendurchmesser und sind auf derselben Höhe nebeneinander angeordnet. Sie sind so ausgebildet und relativ zueinander angeordnet, dass die Süßwarenmasse durch den Spalt geführt und dabei die Dicke des Teigbands durch den Spalt festgelegt werden kann.

Weiter oberhalb ist ein Behälter zum kontinuierlichen Zuführen des Teigs in den Spalt angeordnet. Die zwei Seitenwände des Behälters werden jeweils durch ein angetriebenes Förderband gebildet. Das Förderband endet beabstandet oberhalb der Spaltbildungselemente, so dass dort bereits das Teigband beginnt. Dieses Teigband tritt dann in den Spalt zwischen die beiden Spaltbildungselemente ein und wird dort weiter geformt. Unterhalb der Spaltbildungselemente wird das Teigband dann auf einem weiteren Förderband abgelegt und abtransportiert.

### BESCHREIBUNG DER ERFINDUNG

Die Erfindung betrifft eine Vorrichtung zum Ausformen eines Teppichs aus Süßwarenmasse mit einem ersten Spaltbildungselement und einem zweiten Spaltbildungselement. Das zweite Spaltbildungselement ist als rotierend antreibbare Walze mit einer Umfangsfläche und einem ersten Außendurchmesser ausgebildet. Das erste Spaltbildungselement und das zweite Spaltbildungselement sind so ausgebildet und relativ zueinander angeordnet, dass sie einen Spalt bilden, durch den die Süßwarenmasse geführt und dabei die Dicke des Teppichs durch den Spalt festgelegt werden kann. Das zweite Spaltbildungselement ist so ausgebildet, dass der Teppich auf einem Teil der Umfangsfläche des zweiten Spaltbildungselements aufgenommen, mit diesem während der Rotation mitgeführt und von diesem abgenommen werden kann. Das zweite Spaltbildungselement weist in seinen beiden axial äußeren Bereichen jeweils ein mitrotierendes Mitnahmeelement mit einem im Vergleich zum ersten Außendurchmesser größeren zweiten Außendurchmesser auf.

Bei der Herstellung eines Teppichs aus Süßwarenmasse mit einem Walzenformer besteht im Stand der Technik oftmals das Problem, dass die Süßwarenmasse an den feststehenden Seitenwänden des oberhalb des Spalts angeordneten Behälters anhaftet. Daraus ergibt sich, dass der Teppich im Bereich seiner äußeren Ränder - d. h. an seinen Seitenkanten und dazu benachbarten Bereichen - eine geringere Dichte als im mittleren Bereich seiner Breite besitzt. Wenn dann später aus dem Teppich insbesondere durch Querschneiden und Längsschneiden eine Mehrzahl von Riegeln oder ähnlichen Produkten erzeugt wird, besitzen die aus diesen Randbereichen stammenden Riegel eine geringere Masse. Da der Hersteller der Riegel die auf der Verpackung des Riegels angegebene Masse nur innerhalb definierter Grenzen unterschreiten darf, muss die Vorrichtung so eingestellt werden, dass diese Grenzen auch noch von diesen aus den Randbereichen stammenden Riegeln erfüllt werden. Dies bedeutet im Umkehrschluss, dass die aus der Mitte des Teppichs stammenden Riegel eine unnötig große Masse besitzen, wodurch die Herstellkosten unnötig erhöht sind.

Durch die neue Vorrichtung wird nun das Anhaften der Süßwarenmasse vor ihrer Förderung durch den Spalt verhindert, so dass der gleiche Volumenstrom an Süßwarenmasse über die gesamte Breite des Spalts - d. h. die Arbeitsbreite - zugeführt wird und der damit nach dem Durchtritt durch den Spalt entstandene Teppich eine gleichmäßige Dichte und Höhe über seine Breite besitzt. Dies bedeutet auch, dass die äußeren Ränder bzw. Seitenkanten des Teppichs gleichmäßig ausgebildet sind. Hierdurch muss die Vorrichtung keine Rücksicht auf "untergewichtige" Riegel aus den Randbereichen des Teppichs nehmen und kann im Vergleich zum Stand der Technik mit einem geringeren Materialeinsatz und damit zu geringeren Herstellkosten die gewünschten Produkte erzeugen.

Diese vorteilhafte Wirkung wird insbesondere dadurch erreicht, dass das zweite Spaltbildungselement - d. h. die den Teppich mitnehmende rotierend angetriebene Walze - mindestens zwei mitrotierende Mitnahmeelemente aufweist. Dieses mitrotierenden Mitnahmeelemente besitzt einen im Vergleich zu einem ersten Außendurchmesser des zweiten Spaltbildungselements größeren zweiten Außendurchmesser. Die Mitnahmeelemente ersetzen dabei also teilweise oder vollständig die stillstehenden Seitenwände des Behälters zum Zuführen der Süßwarenmasse.

Je nach den geometrischen Gegebenheiten kann dabei auf zusätzliche Bestandteile eines Behälters verzichtet werden. Erfindungsgemäß ist ein solcher Behälter vorhanden und die Mitnahmeelemente bilden die gegenüberliegenden seitlichen Begrenzungen des Behälters . Der Behälter kann dabei zusätzliche stillstehende Seitenwände aufweisen, so dass die Mitnahmeelemente nur den spaltnahen Teil der seitlichen Begrenzungen des Behälters bilden. Der Behälter kann eine feststehende oder mitbewegte Rückwand aufweisen. Diese Rückwand kann aber auch entfallen.

Die Mitnahmeelemente können sich insgesamt um mindestens etwa 180° der Umfangsfläche des zweiten Spaltbildungselements erstrecken. Diese Erstreckung kann dabei kontinuierlich oder diskontinuierlich gewählt werden. Kontinuierlich bedeutet, dass sich die Mitnahmeelemente in einem zusammenhängenden Bereich befinden, der mindestens 180° der Umfangsfläche des zweiten Spaltbildungselements abdeckt. Diskontinuierlich bedeutet, dass die Mitnahmeelemente als Sektionen ausgebildet sind, die voneinander beabstandet sind und deren Summe mindestens etwa 180° der Umfangsfläche abdeckt. Bevorzugt sind die Mitnahmeelemente aber durchgehend ausgebildet und erstrecken sich um die gesamte Umfangsfläche des zweiten Spaltbildungselements.

Die Mitnahmeelemente können als drehfest mit dem zweiten Spaltbildungselement verbundene Mitnahmeringe ausgebildet sein. Dies kann bedeuten, dass das zweite Spaltbildungselement - d. h. die rotierend antreibbare Walze - eine für sich genommen übliche Geometrie besitzt und erst anschließend durch die Montage der Mitnahmeringe zur Realisierung der Durchmesservergrößerung abgeändert wird. So können auch bereits existierende Walzen umgerüstet werden. Dabei kann es sich bei den Mitnahmeringen insbesondere um Halbringe handeln, die durch Befestigungsmittel, insbesondere Schrauben, fest miteinander verbunden sind. In dieser Weise sind die Mitnahmeringe dann durch Reibschluss fest mit der Umfangsfläche des zweiten Spaltbildungselements verbunden. Es versteht sich, dass aber auch andere Arten der Befestigung - inklusive stoffschlüssiger und formschlüssiger Befestigungen - Anwendung finden können. Die Mitnahmeringe können insbesondere aus Kunststoff oder Metall bestehen. Bei einer Ausbildung aus Kunststoff besteht der Vorteil, dass die Mitnahmeringe ebenfalls vorzugsweise aus Kunststoff bestehende feststehende Teile des Behälters zur Bildung eines Gleitlagers mit geringer Gleitreibung kontaktieren.

Die Mitnahmeelemente können aber auch als Mitnahmeschultern der Walze ausgebildet sein. In diesem Fall weist die Walze also eine grundsätzlich andere Geometrie als Walzen des Stands der Technik auf und ein separater Montageschritt zum Montieren der Mitnahmeelemente ist nicht erforderlich. Die Mitnahmeschultern bestehen also aus demselben Material wie die Walze, d. h. insbesondere Metall. Es ist aber ebenfalls möglich, die gesamte Walze aus Kunststoff oder einem anderen geeigneten Material auszubilden.

Das zweite Spaltbildungselement kann Dichtelemente aufweisen, die in axial äußerer Richtung an die Mitnahmeelemente anschließen. Die Dichtelemente dienen dazu, das ungewollte seitliche Austreten der Süßwarenmasse aus dem Bereich des Behälters zu verhindern. Anders gesagt soll die gesamte Süßwarenmasse zur Bildung des Teppichs durch den Spalt hindurchgeführt werden. Die Dichtelemente können dabei einen anderen Außendurchmesser als die Mitnahmeelemente besitzen. Es kann sich also um weitere Walzenschultern, einen weiteren Absatz der Mitnahmeringe oder zusätzlich montierte Ringe handeln, die letztendlich die gewünschte Dichtwirkung erbringen.

Das erste Spaltbildungselement kann als rotierend antreibbare Walze, feststehende Walze oder feststehendes Wehr ausgebildet sein. Zur Bildung des Spalts ist grundsätzlich nur eine antreibbare Walze erforderlich, wobei es sich bei der hier vorliegenden Erfindung definitionsgemäß dabei um das zweite Spaltbildungselement handelt. Das andere Spaltbildungselement kann unterschiedliche Ausbildungen besitzen, solange sichergestellt ist, dass es gemeinsam mit der rotierend antreibbaren Walze den Spalt bildet.

Das erste Spaltbildungselement kann insbesondere als eine rotierend antreibbare Walze mit einer Umfangsfläche und einem dritten Außendurchmesser ausgebildet sein, wobei der dritte Außendurchmesser kleiner als der zweite Außendurchmesser des zweiten Spaltbildungselements ist. Das erste Spaltbildungselement kann oberhalb des zweiten Spaltbildungselements angeordnet sein. Bei einer solchen Ausbildung ist es möglich, dass auch das erste Spaltbildungselement in seinen beiden axial äußeren Bereichen jeweils ein mitrotierendes Mitnahmeelement mit einem im Vergleich zum dritten Außendurchmesser größeren vierten Außendurchmesser aufweist. In dieser Weise ist die Aufgabe des Verhinderns des Anhaftens der Süßwarenmasse auf die beiden Spaltbildungselemente aufgeteilt, wodurch der Durchmesser des Mitnahmeelements an dem zweiten Spaltbildungselement bzw. die Differenz zwischen diesem Durchmesser und dem ersten Außendurchmesser des zweiten Spaltbildungselements vergleichsweise verringert ist. Dadurch ergibt sich der Vorteil, dass beim Abnehmen des Teppichs von der Umfangsfläche des zweiten Spaltbildungselements ein geringerer Abstand zum Förderband überbrückt werden muss.

Zur Überbrückung der Differenz zwischen dem ersten Außendurchmesser des zweiten Spaltbildungselements und dem zweiten Außendurchmesser der Mitnahmeelemente kann ein feststehendes Transferelement zum Überführen des Teppichs von dem zweiten Spaltbildungselement auf ein Förderband vorgesehen sein. Dieses Transferelement ist in dem Bereich der Vorrichtung angeordnet, in dem der Teppich von der Umfangsfläche des zweiten Spaltbildungselements abgenommen wird.

Das zweite Spaltbildungselement kann so ausgebildet sein, dass im Bereich des Spalts nur der vergleichsweise kleinere erste Außendurchmesser und der vergleichsweise größere Außendurchmesser vorhanden sind. In beiden anschließenden axialen Außenbereichen können dann aber auch weitere Bereiche mit anderen Außendurchmessern vorgesehen sein. Vorzugsweise ist zwischen den vergrößerten zweiten Außendurchmessern nur ein weiterer Außendurchmesser - nämlich der kleinere erste Außendurchmesser - vorhanden.

Die mindestens eine Walze besitzt insbesondere eine glatte Oberfläche, so dass der Teppich einen ebenen Boden und eine ebene Oberseite erhält. Es ist aber auch möglich, dass es sich um mindestens eine Formwalze handelt, deren nicht-glatte Geometrie die Oberfläche des Teppichs umformend prägt. Der Teppich besitzt dann also insbesondere eine unebene Oberseite.

Die Breite des Spalts in axialer Richtung des zweiten Spaltbildungselements definiert die Breite des Teppichs. Die Höhe des Spalts senkrecht dazu definiert die Dicke des Teppichs. Bei einer kontinuierlichen Herstellung ist die Länge des Teppichs unendlich. Die Breite des anschließenden Förderbands ist meist etwas größer als die Breite des Teppichs und wird auch als Arbeitsbreite bezeichnet.

Das Abnehmen des Teppichs von einer oder beiden Oberflächen der Spaltbildungselemente erfolgt insbesondere durch Abstreifer. Dabei kann ein erster Abstreifer im Bereich des Spalts angeordnet sein und zur Abnahme des Teppichs von der Oberfläche des ersten Spaltbildungselements dienen. Ein zweiter Abstreifer ist dann dem zweiten Spaltbildungselement zugeordnet und sorgt schließlich dafür, dass der Teppich frei kommt und nach der Übergabe durch das Transferelement auf dem Förderband abgelegt wird.

Die Süßwarenmasse kann insbesondere Nougat, Karamell, Fudge oder ähnliche fetthaltige Massen oder Zucker und/oder Zuckersatzstoffe enthaltende Massen enthalten. Weitere Bestandteile können feste Stücke, z. B. gehackte Mandeln, Nüsse, Cornflakes, Körner usw. sein. Bei den aus dem Teppich dieser Masse herzustellen Produkten kann es sich insbesondere um Riegel, z. B. Cerealien-Riegel, Brittle-Produkte oder Krokant-Produkte usw. handeln.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Mitnahmeelement die Rede ist, ist dies so zu verstehen, dass genau ein Mitnahmeelement, zwei Mitnahmeelemente oder mehr Mitnahmeelemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Schnittansicht einer ersten beispielhaften Ausführungsform der neuen Vorrichtung zum Ausformen eines Teppichs aus Süßwarenmasse.
- **Fig. 2**: zeigt eine weitere Schnittansicht der Vorrichtung gemäß Fig. 1.
- **Fig. 3**: zeigt eine Fig. 2 entsprechende Schnittansicht einer zweiten beispielhaften Ausführungsform der Vorrichtung.
- **Fig. 4**: zeigt eine Fig. 2 entsprechende Schnittansicht einer dritten beispielhaften Ausführungsform der Vorrichtung.
- **Fig. 5**: zeigt eine Fig. 2 entsprechende Schnittansicht einer vierten beispielhaften Ausführungsform der Vorrichtung.
- **Fig. 6**: zeigt eine weitere Schnittansicht der Vorrichtung gemäß Fig. 1 in Kombination mit einer weiteren neuen Vorrichtung.
- **Fig. 7**: zeigt eine weitere Schnittansicht der Vorrichtung gemäß Fig. 1 in Kombination mit einer weiteren neuen Vorrichtung.
- **Fig. 8**: zeigt eine Schnittansicht eines Teils der Vorrichtung gemäß Fig. 1.

### FIGURENBESCHREIBUNG

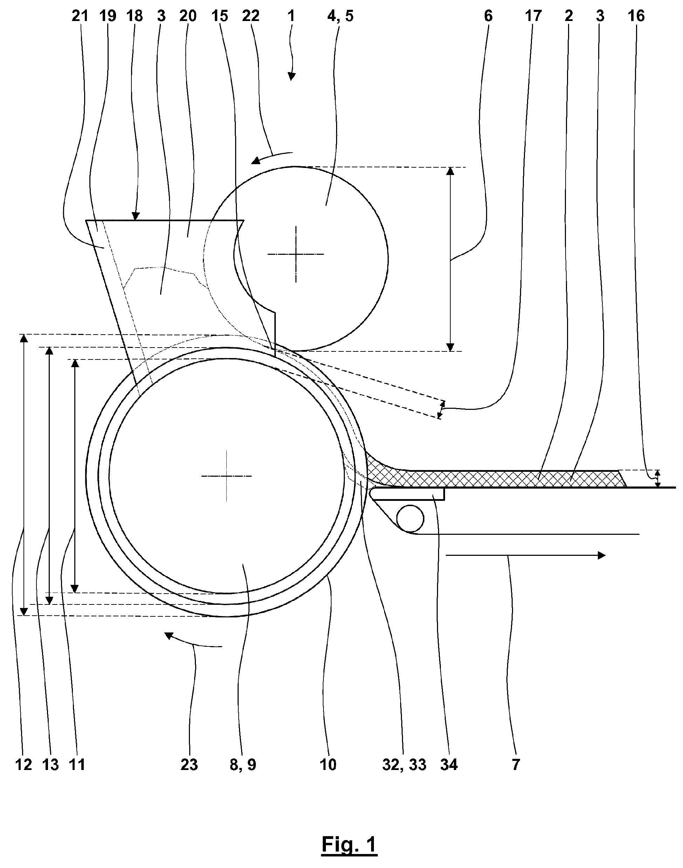

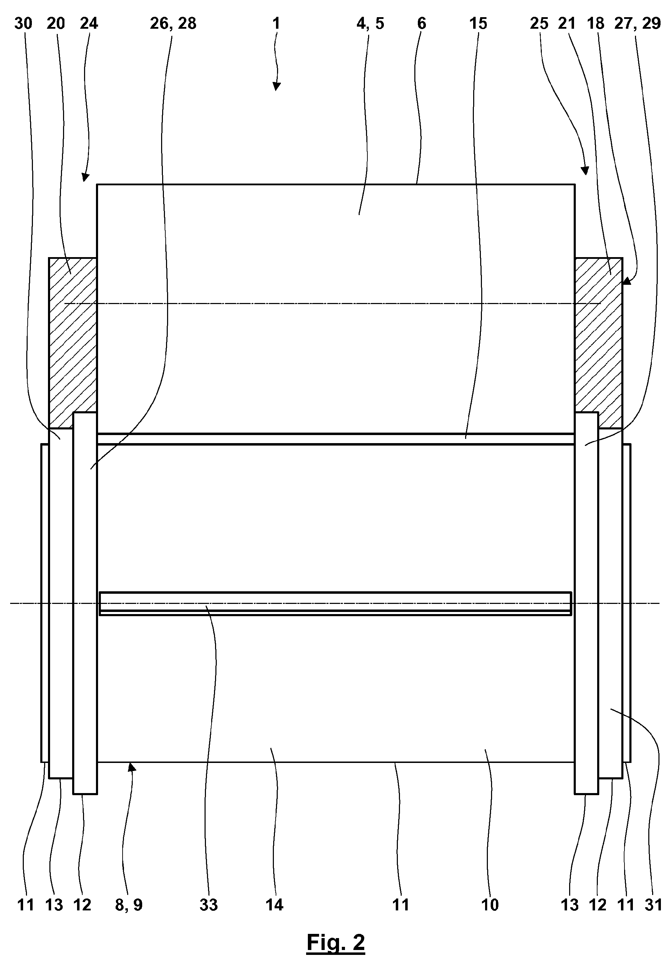

**Fig. 1** **und** **2** zeigen zwei unterschiedliche Schnittansichten einer ersten beispielhaften Ausführungsform einer neuen Vorrichtung 1 zum Ausformen eines Teppichs 2 aus Süßwarenmasse 3. Fig. 1 zeigt dabei einen Querschnitt, während Fig.2 einen Längsschnitt zeigt.

Unter einem Teppich 2 ist ein langer und zunächst - bei kontinuierlicher Herstellung - endloser Strang einer Süßwarenmasse 3 zu verstehen, aus dem später durch Querschneiden und Längsschneiden eine Vielzahl von Süßwarenprodukten, insbesondere Riegeln, hergestellt wird. Die Süßwarenmasse 3 kann insbesondere Nougat, Karamell, Fudge oder ähnliche fetthaltige Massen oder Zucker und/oder Zuckersatzstoffe enthaltende Massen enthalten. Weitere Bestandteile können feste Stücke, z. B. gehackte Mandeln, Nüsse, Cornflakes, Körner usw. sein. Bei den aus dem Teppich dieser Masse herzustellen Produkten kann es sich insbesondere um Riegel, z. B. Cerealien-Riegel, Brittle-Produkte oder Krokant-Produkte usw. handeln.

Die Vorrichtung 1 weist ein erstes Spaltbildungselement 4 auf, das hier als erste rotierend antreibbare Walze 5 ausgebildet ist, die durch einen Antrieb (nicht dargestellt) in einer ersten Drehrichtung 22 angetrieben wird. Es könnte sich aber auch um eine feststehende Walze oder ein feststehendes Wehr handeln. Die Walze 5 weist einen vierten Außendurchmesser 6 auf und besitzt eine im Wesentlichen zylindrische Form.

Das erste Spaltbildungselement 4 ist oberhalb und in einer Arbeitsrichtung 7 versetzt zu einem zweiten Spaltbildungselement 8 angeordnet. Das zweite Spaltbildungselement 8 ist ebenfalls als rotierend antreibbare Walze 9 ausgebildet, die durch einen Antrieb (nicht dargestellt) in einer zweiten Drehrichtung 23 angetrieben wird. Die Walze 9 weist eine Umfangsfläche 10, einen ersten Außendurchmesser 11, einen zweiten Außendurchmesser 12 und einen dritten Außendurchmesser 13 auf. Der erste Außendurchmesser 11 wird dabei durch einen zylindrischen axialen Mittelteil 14 gebildet. Dieser axiale Mittelteil 14 bildet gemeinsam mit dem ersten Spaltbildungselement 4 einen Spalt 15, durch den die Süßwarenmasse 3 geführt und dabei die Dicke 16 des Teppichs 2 durch die Höhe 17 des Spalts 15 festgelegt wird.

Für das kontinuierliche Zuführen der Süßwarenmasse 3 in den Spalt 15 weist die Vorrichtung 1 einen Behälter 18 mit Seitenwänden 19, 20 und einer Rückwand 21 auf. Die Seitenwände 19, 20 und die Rückwand 21 könnten aber auch ganz oder teilweise entfallen. In dem Behälter 18 ist so viel Süßwarenmasse 3 eingefüllt, dass eine kontinuierliche Herstellung des Teppichs 2 möglich ist. Die Süßwarenmasse 3 wird dabei in bekannter kontinuierlicher oder quasi-kontinuierlicher Weise oder satzweise dem Behälter 18 zugeführt.

Das zweite Spaltbildungselement 8 ist nun in besonderer Weise ausgebildet, um sicherzustellen, dass der Teppich 2 möglichst eine gleichbleibende Dichte, Dicke 16 und Breite aufweist. Hierfür weist das zweite Spaltbildungselement 8 in seinen beiden axial äußeren Bereichen 24, 25 jeweils ein mitrotierendes Mitnahmeelement 26, 27 mit dem im Vergleich zum ersten Außendurchmesser 11 größeren zweiten Außendurchmesser 12 auf. Es versteht sich, dass die Mitnahmeelemente 26, 27 auch unterschiedliche Außendurchmesser 12 besitzen können.

In diesem Ausführungsbeispiel sind die Mitnahmeelemente 26, 27 als drehfest mit dem zweiten Spaltbildungselement 8 verbundene Mitnahmeringe 28, 29 ausgebildet. Die Mitnahmeringe 28, 29 sind in diesem Fall so ausgebildet, dass sie nicht nur den Bereich des dritten Außendurchmessers 13, sondern auch des zweiten Außendurchmessers 12 bilden. In dieser Weise stellen sie gleichzeitig Dichtelemente 30, 31 dar, die ein ungewolltes seitliches Austreten der Süßwarenmasse 3 aus dem inneren Bereich des Behälters 18 verhindern.

Bei der gegenläufigen Rotation der Walze 5 in der Drehrichtung 22 und der Walze 9 in der Drehrichtung 23 drehen also die Mitnahmeelemente 26, 27 mit der Walze 9 mit. Sie bilden dabei die innere Begrenzung des Behälters 18, an der die Süßwarenmasse 3 anliegt. Da die Mitnahmeelemente 26, 27 nun aber mitgedreht werden, kann an ihnen keine Süßwarenmasse 3 anhaften. Stattdessen wird die Süßwarenmasse 3 kontinuierlich und gleichmäßig dem Spalt 15 zugeführt.

Beim Hindurchführen durch den Spalt 15 erhält der Teppich 2 seine Dicke 16. Er liegt dann auf der Umfangsfläche 10 der Walze 9 während ihrer Drehung in der Drehrichtung 23 auf, bis er von der Umfangsfläche 10 abgenommen wird. Diese Abnahme erfolgt durch ein Abstreifelement 32. Das Abstreifelement 32 ist hier gleichzeitig als feststehendes Transferelement 33 ausgebildet, welches zur Überbrückung der Differenz zwischen dem ersten Außendurchmesser 11 und dem zweiten Außendurchmesser 12 und zum Überführen des Teppichs 2 von dem zweiten Spaltbildungselement 9 auf ein Förderband 34 dient. Bei dem Abstreifelement 32 und dem Transferelement 33 kann es sich aber auch um separate Bauteile handeln. Das erste Spaltbildungselement 4 kann ebenfalls einen Abstreifer aufweisen, der hier aber aus Übersichtlichkeitsgründen nicht dargestellt ist.

Der Teppich 2 wird dann also auf dem Förderband 34 abgelegt und in der Arbeitsrichtung 7 abtransportiert. Anschließend können weitere Bearbeitungsschritte folgen. Dabei handelt es sich insbesondere um eine Kalibrierung, die Aufbringung einer weiteren Masse, eine weitere Formgebung, Querschneiden, Längsschneiden, eine wärmemäßige Behandlung, das Überziehen mit Schokolade usw.

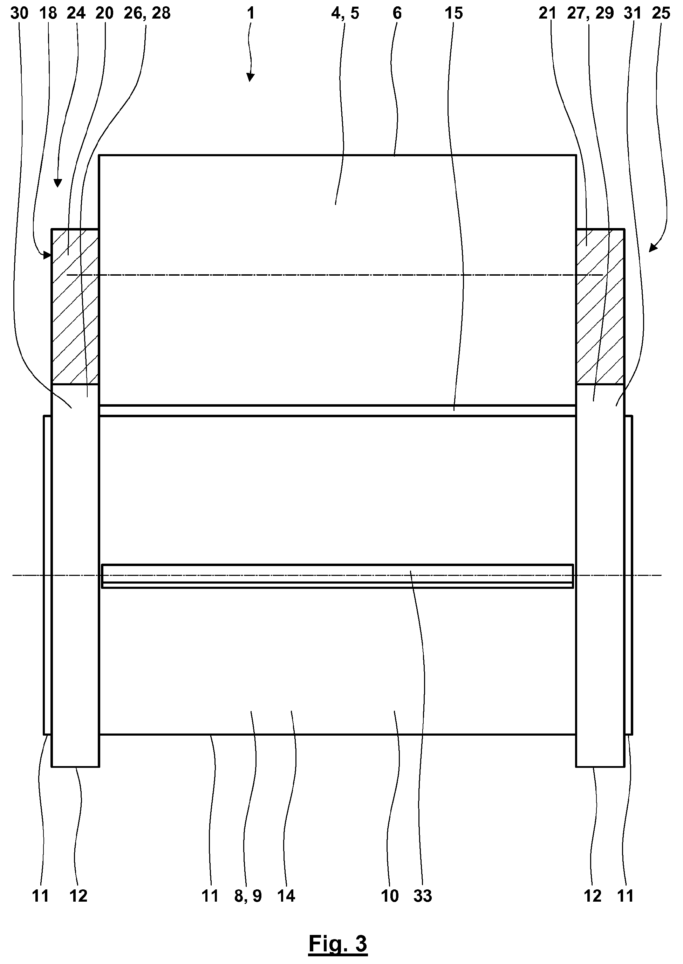

**Fig. 3** zeigt einen Fig. 2 entsprechenden Querschnitt einer zweiten beispielhaften Ausführungsform der neuen Vorrichtung 1. Bezüglich der übereinstimmenden Merkmale wird auf die oberhalb angegebenen Ausführungen zu Fig. 1 und 2 verwiesen.

Im Unterschied dazu weisen hier die ebenfalls als Mitnahmeringe 28, 29 ausgebildeten Mitnahmeelemente 26, 27 nur einen zweiten Außendurchmesser 12 auf. Somit bilden sie auch gleichzeitig die Dichtelemente 30, 31.

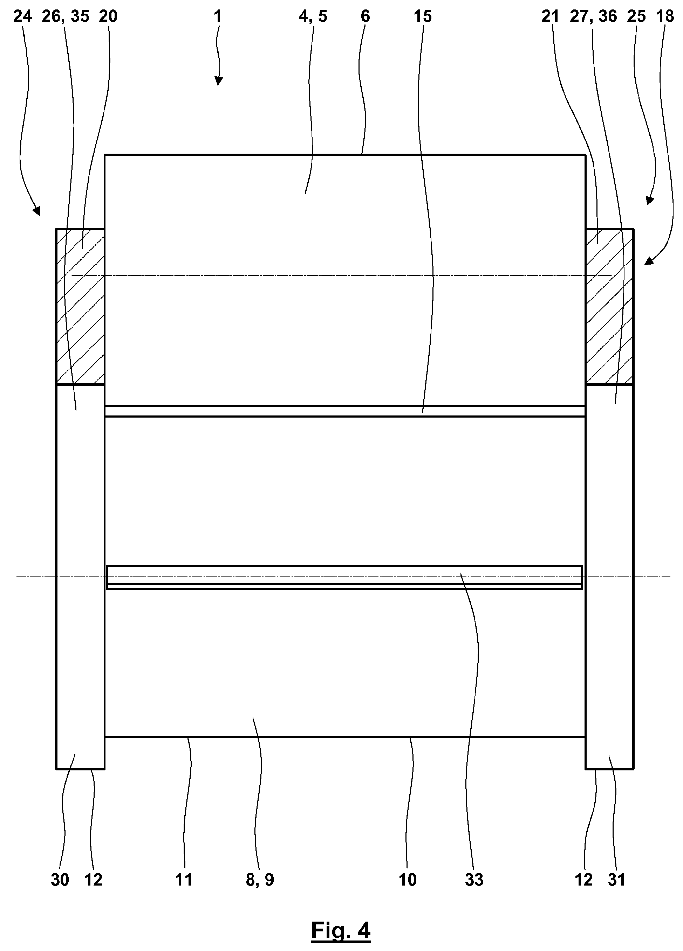

**Fig. 4** zeigt einen Fig. 2 entsprechenden Querschnitt einer zweiten beispielhaften Ausführungsform der neuen Vorrichtung 1. Bezüglich der übereinstimmenden Merkmale wird auf die oberhalb angegebenen Ausführungen zu Fig. 1 und 2 verwiesen.

Im Unterschied dazu sind hier die Mitnahmeelemente 26, 27 als Mitnahmeschultern 35, 36 und somit einstückig mit der Walze 5 ausgebildet.

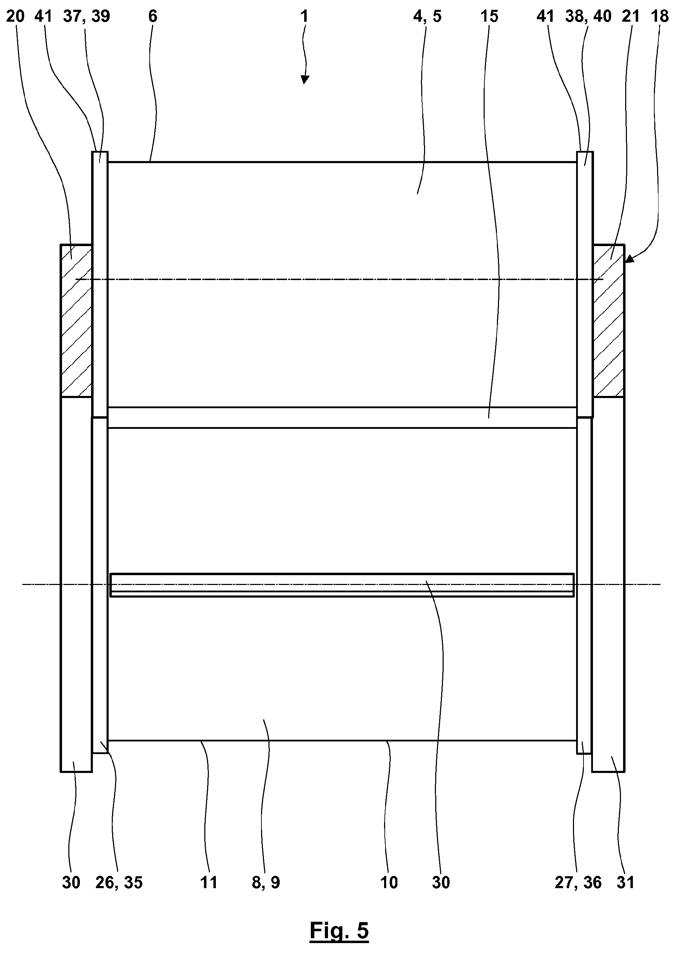

**Fig. 5** zeigt einen Fig. 2 entsprechenden Querschnitt einer zweiten beispielhaften Ausführungsform der neuen Vorrichtung 1. Bezüglich der übereinstimmenden Merkmale wird auf die oberhalb angegebenen Ausführungen zu Fig. 1 und 2 verwiesen.

Im Unterschied dazu sind hier nicht nur die Mitnahmeelemente 26, 27 am zweiten Spaltbildungselement 8, sondern zusätzlich Mitnahmeelemente 37, 38 am ersten Spaltbildungselement 4 vorhanden. Die Mitnahmeelemente 37, 38 sind als Mitnahmeschultern 39, 40 ausgebildet. Es könnte sich aber auch um Mitnahmeringe oder anders ausgebildete Mitnahmeelemente 37, 38 handeln.

Die Mitnahmeelemente 26, 27 an dem zweiten Spaltbildungselement 8 sind hier wieder als Mitnahmeschultern 35, 36 ausgebildet. Sie könnten aber ebenfalls als Mitnahmeringe oder andere Mitnahmeelemente 26, 27 ausgebildet sein. Hier sind dann auch die Dichtelemente 30, 31 als Wellenschultern ausgebildet. Es könnte sich aber auch um aufgesetzte Ringe handeln.

Bei dieser Ausführungsform der Vorrichtung 1 wurde also die gewünschte Mitnahmefunktion auf die beiden Spaltbildungselemente 4, 8 aufgeteilt. Hierdurch kann beispielsweise eine größere Dicke 16 des Teppichs 2 hergestellt werden, ohne dass der insbesondere zu einem Transportband 34 zu überbrückende Abstand von der Umfangsfläche 10 des zweiten Spaltbildungselements 8 vergrößert wird. Das erste Spaltbildungselement 4 weist also neben seinem "normalen" vierten Außendurchmesser 6 in seinen beiden axial äußeren Bereichen einen vergrößerten fünften Außendurchmesser 41 auf.

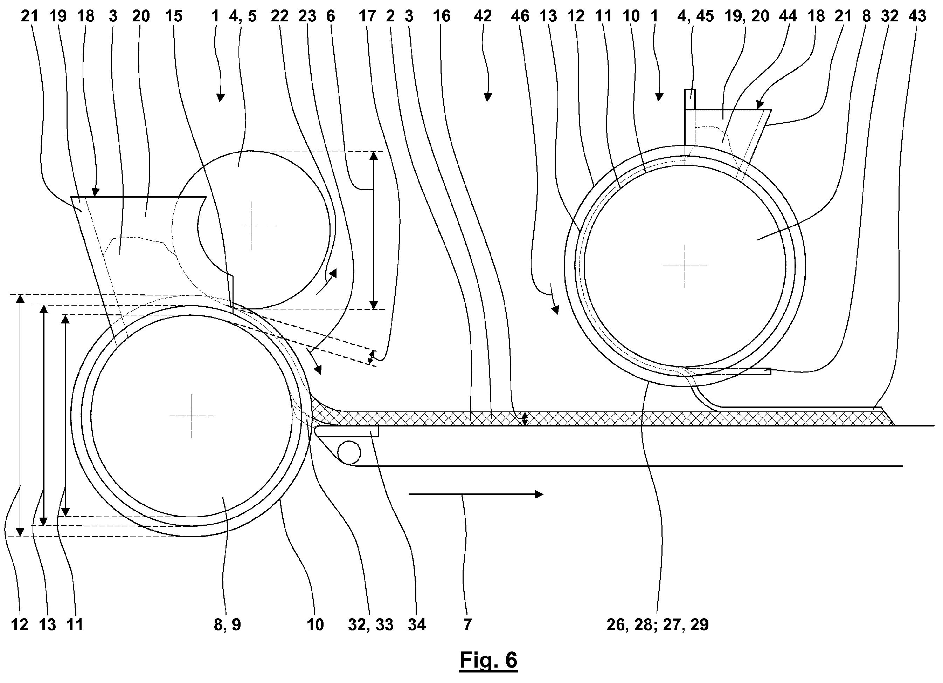

**Fig. 6** zeigt eine Querschnittsansicht einer Anlage 42 mit zwei Vorrichtungen 1. Die im linken Bereich angeordnete erste Vorrichtung 1 weist den gleichen Aufbau wie die in Fig. 1 dargestellte Vorrichtung 1 auf, so dass diesbezüglich auf die zugehörige Beschreibung verwiesen wird.

Stromabwärts in der Arbeitsrichtung 7 ist eine zweite Vorrichtung 1 angeordnet. Diese dient im dargestellten Beispiel dazu, um auf den von der ersten Vorrichtung 1 hergestellten Teppich 2 einen weiteren Teppich 43 aus einer weiteren Süßwarenmasse 44 aufzubringen.

Die zweite Vorrichtung 1 weist ein erstes Spaltbildungselement 4 und ein zweites Spaltbildungselement 8 auf. Das zweite Spaltbildungselement 8 besitzt viele Übereinstimmungen mit dem im linken Bereich der Fig. 6 sowie in Fig. 1 und 2 dargestellten zweiten Spaltbildungselement 8, so dass diesbezüglich auf die vorangehende Beschreibung verwiesen wird.

Im Unterschied dazu ist das erste Spaltbildungselement 4 hier als feststehendes Wehr 45 ausgebildet. Im unteren Sektor des zweiten Spaltbildungselements 8 ist das Abstreifelement 32 angeordnet, welches den Teppich 43 von der Umfangsfläche 10 der Walze 9 des zweiten Spaltbildungselements 8 abnimmt. Der Teppich 43 wird dann in geschwindigkeitsmäßig koordinierter Weise auf dem weitertransportierten ersten Teppich 2 abgelegt und bildet somit eine zweite Schicht des zu erzeugenden Süßwarenprodukts. Die Walze 9 wird dabei in der Drehrichtung 46 angetrieben.

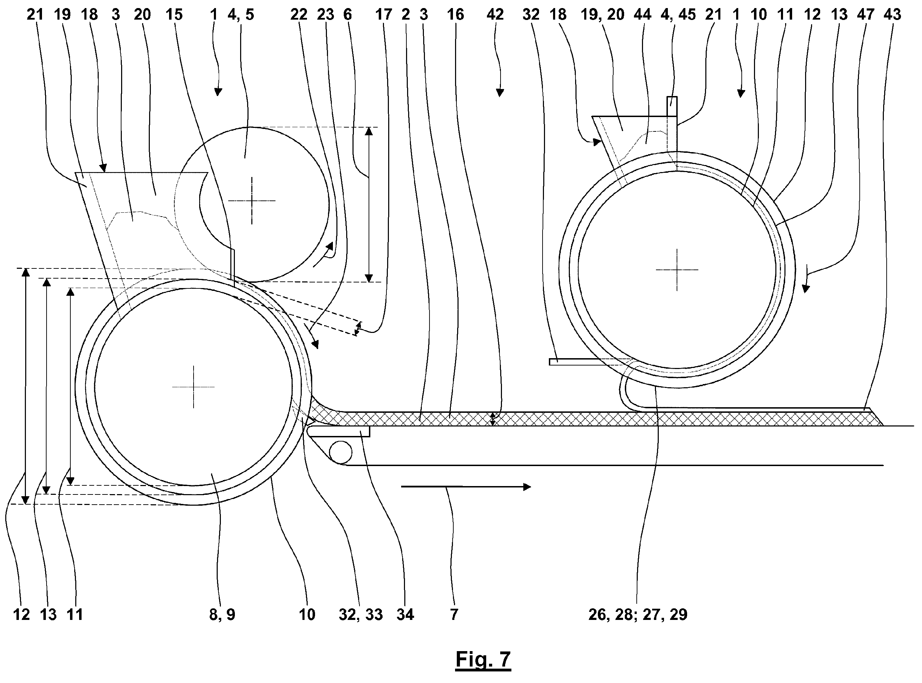

**Fig. 7** zeigt weitere Ausführungsform einer Anlage 42 mit der zuvor beschriebenen ersten Vorrichtung 1 sowie einer anderen Ausführungsform einer zweiten Vorrichtung 1. Es wird daher wie zuvor zwecks Vermeidung unnötiger Wiederholungen nun nur detailliert auf die Unterschiede zu den zuvor beschriebenen Ausführungsformen eingegangen.

In diesem Fall wird der zweite Teppich 43 nicht durch eine linksdrehende Anordnung des zweiten Spaltbildungselements 8, sondern eine rechtsdrehende Anordnung in der Drehrichtung 47 hergestellt.

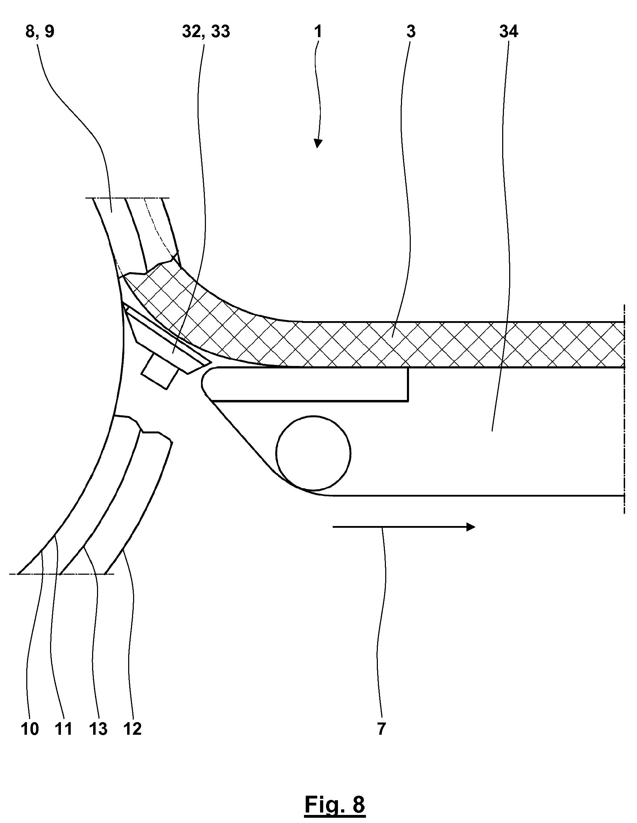

**Fig. 8** zeigt schließlich eine Detailansicht der Stelle der Vorrichtung u. a. gemäß Fig. 1, an der die Übergabe des Teppichs 2 vom zweiten Spaltbildungselement 8 auf das Förderband 34 erfolgt. Es ist gut erkennbar, dass das Abstreifelement 32 gleichzeitig das Transferelement 33 bildet, welches zur Überbrückung des halben Durchmesserunterschieds zwischen dem ersten Außendurchmesser 11 und dem zweiten Außendurchmesser 12 dient.

### BEZUGSZEICHENLISTE

- 1: Vorrichtung
- 2: Teppich
- 3: Süßwarenmasse
- 4: erstes Spaltbildungselement
- 5: Walze
- 6: vierter Außendurchmesser
- 7: Arbeitsrichtung
- 8: zweites Spaltbildungselement
- 9: Walze
- 10: Umfangsfläche
- 11: erster Außendurchmesser
- 12: zweiter Außendurchmesser
- 13: dritter Außendurchmesser
- 14: axialer Mittelteil
- 15: Spalt
- 16: Dicke
- 17: Höhe
- 18: Behälter
- 19: Seitenwand
- 20: Seitenwand
- 21: Rückwand
- 22: erste Drehrichtung
- 23: zweite Drehrichtung
- 24: axial äußerer Bereich
- 25: axial äußerer Bereich
- 26: Mitnahmeelement
- 27: Mitnahmeelement
- 28: Mitnahmering
- 29: Mitnahmering
- 30: Dichtelement
- 31: Dichtelement
- 32: Abstreifelement
- 33: Transferelement
- 34: Förderband
- 35: Mitnahmeschulter
- 36: Mitnahmeschulter
- 37: Mitnahmeelement
- 38: Mitnahmeelement
- 39: Mitnahmeschulter
- 40: Mitnahmeschulter
- 41: fünfter Außendurchmesser
- 42: Anlage
- 43: Teppich
- 44: Süßwarenmasse
- 45: Wehr
- 46: Drehrichtung
- 47: Drehrichtung

## Patentansprüche

1. Vorrichtung (1) zum Ausformen eines Teppichs (2, 43) aus Süßwarenmasse (3, 44), mit
einem ersten Spaltbildungselement (4); und
einem zweiten Spaltbildungselement (8),
wobei das zweite Spaltbildungselement (8) als rotierend antreibbare Walze (9) mit einer Umfangsfläche (10) und einem ersten Außendurchmesser (11) ausgebildet ist,
wobei das erste Spaltbildungselement (4) und das zweite Spaltbildungselement (8) so ausgebildet und relativ zueinander angeordnet sind, dass sie einen Spalt (15) bilden, durch den die Süßwarenmasse (3, 44) geführt und dabei die Dicke (16) des Teppichs (2, 43) durch die Höhe (17) des Spalts (15) festlegt werden kann,
wobei das zweite Spaltbildungselement (8) so ausgebildet ist, dass der Teppich (2, 43) auf einem Teil der Umfangsfläche (10) des zweiten Spaltbildungselements (8) aufgenommen, mit diesem während der Rotation mitgeführt und von diesem abgenommen werden kann, und
wobei das zweite Spaltbildungselement (8) in seinen beiden axial äußeren Bereichen (24, 25) jeweils ein mitrotierendes Mitnahmeelement (26, 27) mit einem im Vergleich zum ersten Außendurchmesser (11) größeren zweiten Außendurchmesser (12) aufweist, **gekennzeichnet durch**
einen Behälter (18) zum Aufnehmen der Süßwarenmasse (3, 44) und zum kontinuierlichen Zuführen der Süßwarenmasse (3, 44) in den Spalt (15), wobei die Mitnahmeelemente (26, 27) gegenüberliegende seitliche Begrenzungen des Behälters (18) bilden.

2. Vorrichtung (1) nach Anspruch 1, **dadurch gekennzeichnet, dass** sich die Mitnahmeelemente (26, 27) um insgesamt mindestens 180° der Umfangsfläche (10) des zweiten Spaltbildungselements (8) erstrecken.

3. Vorrichtung (1) nach mindestens einem der vorhergehenden Ansprüche, **dadurch gekennzeichnet, dass** sich die Mitnahmeelemente (26, 27) um 360° der Umfangsfläche (10) des zweiten Spaltbildungselements (8) erstrecken.

4. Vorrichtung (1) nach mindestens einem der vorhergehenden Ansprüche, **dadurch gekennzeichnet, dass** die Mitnahmeelemente (26, 27) als drehfest mit dem zweiten Spaltbildungselement (8) verbundene Mitnahmeringe (28, 29) ausgebildet sind.

5. Vorrichtung (1) nach Anspruch 4, **dadurch gekennzeichnet, dass** die Mitnahmeringe (28, 29) Halbringe aufweisen, die durch Befestigungsmittel, insbesondere Schrauben, fest miteinander verbunden sind.

6. Vorrichtung (1) nach Anspruch 4 oder 5, **dadurch gekennzeichnet, dass** die Mitnahmeringe (28, 29) durch Reibschluss fest mit der Umfangsfläche (10) des zweiten Spaltbildungselements (8) verbunden sind.

7. Vorrichtung (1) nach mindestens einem der vorhergehenden Ansprüche, **dadurch gekennzeichnet, dass** die Mitnahmeelemente (26, 27) als Mitnahmeschultern (35, 36) der Walze (9) ausgebildet sind.

8. Vorrichtung (1) nach mindestens einem der vorhergehenden Ansprüche, **dadurch gekennzeichnet, dass** das zweite Spaltbildungselement (8) Dichtelemente (30, 31) aufweist, die in axial äußerer Richtung an die Mitnahmeelemente (26, 27) anschließen.

9. Vorrichtung (1) nach Anspruch 8, **dadurch gekennzeichnet, dass** die Dichtelemente (30, 31) einen anderen Außendurchmesser als die Mitnahmeelemente (26, 27) besitzen.

10. Vorrichtung (1) nach mindestens einem der vorhergehenden Ansprüche, **dadurch gekennzeichnet, dass** das erste Spaltbildungselement (4) als rotierend antreibbare Walze (5), feststehende Walze oder feststehendes Wehr (45) ausgebildet ist.

11. Vorrichtung (1) nach mindestens einem der vorhergehenden Ansprüche, **dadurch gekennzeichnet, dass** das erste Spaltbildungselement (4) als rotierend antreibbare Walze (5) mit einem vierten Außendurchmesser (6) ausgebildet ist, wobei der vierte Außendurchmesser (6) kleiner als der zweite Außendurchmesser (12) des zweiten Spaltbildungselements (8) ist.

12. Vorrichtung (1) nach mindestens einem der vorhergehenden Ansprüche, **dadurch gekennzeichnet, dass** das erste Spaltbildungselement (4) oberhalb des zweiten Spaltbildungselements (8) angeordnet ist.

13. Vorrichtung (1) nach mindestens einem der vorhergehenden Ansprüche, **dadurch gekennzeichnet, dass** das erste Spaltbildungselement (4) als rotierend antreibbare Walze (5) mit einem vierten Außendurchmesser (6) ausgebildet ist und in seinen beiden axial äußeren Bereichen jeweils ein mitrotierendes Mitnahmeelement (37, 38) mit einem im Vergleich zum vierten Außendurchmesser (6) größeren fünften Außendurchmesser (41) aufweist.

14. Vorrichtung (1) nach mindestens einem der vorhergehenden Ansprüche, **dadurch gekennzeichnet, dass** das zweite Spaltbildungselement (8) zur Überbrückung der Differenz zwischen dem ersten Außendurchmesser (11) des zweiten Spaltbildungselements (8) und dem zweiten Außendurchmesser (12) der Mitnahmeelemente (26, 27) ein feststehendes Transferelement (33) zum Überführen des Teppichs (2) von dem zweiten Spaltbildungselement (8) auf ein Förderband (34) aufweist.

## Claims

1. An apparatus (1) for forming a slab (2, 43) of confectionary mass (3, 44), comprising:
a first gap forming element (4); and
a second gap forming element (8),
the second gap forming element (8) being designed as a rotatingly driveable roller (9) having a circumferential surface (10) and a first outer diameter (11),
the first gap forming element (4) and the second gap forming element (8) being designed and arranged with respect to one another such that they form a gap (15) through which the confectionary mass (3, 44) is moved, the thickness (16) of the slap (2, 43) being determinable by the height (17) of the gap (15),
the second gap forming element (8) being designed such that the slab (2, 43) can be supported on a part of the circumferential surface (10) of the second gap forming element (8), that it can be commonly moved therewith during the rotation and that it can be removed therefrom, and
the second gap forming element (8) in each of its two axial outer portions (24, 25) including a commonly rotated carrying element (26, 27) having a second outer diameter (12) being greater than the first outer diameter (11), **characterised by**
a container (18) for receiving the confectionary mass (3, 44) and for continuously feeding the confectionary mass (3, 44) into the gap (15), the carrying elements (26, 27) forming opposite lateral limits of the container (18).

2. The apparatus (1) of claim 1, **characterised in that** the carrying elements (26, 27) extend over a total of at least 180° of the circumferential surface (10) of the second gap forming element (8).

3. The apparatus (1) of at least one of the preceding claims, **characterised in that** the carrying elements (26, 27) extend over 360° of the circumferential surface (10) of the second gap forming element (8).

4. The apparatus (1) of at least one of the preceding claims, **characterised in that** the carrying elements (26, 27) are designed as carrying rings (28, 29) being fixedly connected to the second gap forming element (8) to be commonly rotated therewith.

5. The apparatus (1) of claim 4, **characterised in that** the carrying rings (28, 29) include half-rings being fixedly connected to one another by connecting means, especially screws.

6. The apparatus (1) of claim 4 or 5, **characterised in that** the carrying rings (28, 29) are fixedly connected to the circumferential surface (10) of the second gap forming element (8) by frictional engagement.

7. The apparatus (1) of at least one of the preceding claims, **characterised in that** the carrying elements (26, 27) are designed as carrying shoulders (35, 36) of the roller (9).

8. The apparatus (1) of at least one of the preceding claims, **characterised in that** the second gap forming element (8) includes sealing elements (30, 31) being located next to the carrying elements (26, 27) in an axial outer direction.

9. The apparatus (1) of claim 8, **characterised in that** the sealing elements (30, 31) have a different outer diameter than the carrying elements (26, 27).

10. The apparatus (1) of at least one of the preceding claims, **characterised in that** the first gap forming element (4) is designed as a rotatingly driveable roller (5), a stationary roller or a stationary weir (45).

11. The apparatus (1) of at least one of the preceding claims, **characterised in that** the first gap forming element (4) is designed as a rotatingly driveable roller (5) having a fourth outer diameter (6), the fourth outer diameter (6) being smaller than the second outer diameter (12) of the second gap forming element (8).

12. The apparatus (1) of at least one of the preceding claims, **characterised in that** the first gap forming element (4) is arranged above the second gap forming element (8).

13. The apparatus (1) of at least one of the preceding claims, **characterised in that** the first gap forming element (4) is designed as a rotatingly driveable roller (5) having a fourth outer diameter (6) and to include, in each of its two axial outer regions, a carrying element (37, 38) being commonly rotated therewith and having a fifth outer diameter (41) being greater than the fourth outer diameter (6).

14. The apparatus (1) of at least one of the preceding claims, **characterised in that** the second gap forming element (8), for bridging the difference between the first outer diameter (11) of the second gap forming element (8) and the second outer diameter (12) of the carrying elements (26, 27), includes a stationary transfer element (33) for transferring the slab (2) from the second gap forming element (8) onto a conveyor belt (34).

## Revendications

1. Dispositif (1) destiné à démouler un tapis (2, 43) de masse de confiserie (3, 44), avec
un premier élément de formation d'interstice (4); et
un deuxième élément de formation d'interstice (8),
le deuxième élément de formation d'interstice (8) étant constitué en tant que rouleau (9), pouvant être entraîné en rotation, avec une surface circonférentielle (10) et un premier diamètre extérieur (11),
le premier élément de formation d'interstice (4) et le deuxième élément de formation d'interstice (8) étant constitués et disposés l'un par rapport à l'autre de telle sorte qu'ils forment un interstice (15) à travers lequel la masse de confiserie (3, 44) est guidée, et en l'occurrence l'épaisseur (16) du tapis (2, 43) peut être spécifiée par la hauteur (17) de l'interstice (15),
le deuxième élément de formation d'interstice (8) étant constitué de telle sorte que le tapis (2, 43) est reçu sur une partie de la surface circonférentielle (10) du deuxième élément de formation d'interstice (8), est entraîné avec celle-ci pendant la rotation et peut être enlevé de celle-ci, et
le deuxième élément de formation d'interstice (8) présentant dans ses deux zones (24, 25) extérieures axialement respectivement un élément d'entraînement (26, 27), en rotation solidaire, avec un deuxième diamètre extérieur (12) qui est plus grand comparé au premier diamètre extérieur (11), **caractérisé par**
un réservoir (18) destiné à recevoir la masse de confiserie (3, 44) et à acheminer en continu la masse de confiserie (3, 44) dans l'interstice (15), les éléments d'entraînement (26, 27) formant des limitations latérales opposées du réservoir (18).

2. Dispositif (1) selon la revendication 1, **caractérisé en ce que** les éléments d'entraînement (26, 27) s'étendent au total sur au moins 180° de la surface circonférentielle (10) du deuxième élément de formation d'interstice (8).

3. Dispositif (1) selon au moins une des revendications précédentes, **caractérisé en ce que** les éléments d'entraînement (26, 27) s'étendent sur 360° de la surface circonférentielle (10) du deuxième élément de formation d'interstice (8).

4. Dispositif (1) selon au moins une des revendications précédentes, **caractérisé en ce que** les éléments d'entraînement (26, 27) sont constitués en tant que bagues d'entraînement (28, 29) raccordées de façon solidaire en rotation au deuxième élément de formation d'interstice (8).

5. Dispositif (1) selon la revendication 4, **caractérisé en ce que** les bagues d'entraînement (28, 29) présentent des demi-bagues qui sont raccordées fixement les unes aux autres par des moyens de fixation, en particulier des vis.

6. Dispositif (1) selon la revendication 4 ou 5, **caractérisé en ce que** les bagues d'entraînement (28, 29) sont raccordées fixement par liaison par friction à la surface circonférentielle (10) du deuxième élément de formation d'interstice (8).

7. Dispositif (1) selon au moins une des revendications précédentes, **caractérisé en ce que** les éléments d'entraînement (26, 27) sont constitués en tant qu'épaulements d'entraînement (35, 36) du rouleau (9).

8. Dispositif (1) selon au moins une des revendications précédentes, **caractérisé en ce que** le deuxième élément de formation d'interstice (8) présente des éléments d'étanchéité (30, 31) qui se raccordent aux éléments d'entraînement (26, 27) dans la direction extérieure axialement.

9. Dispositif (1) selon la revendication 8, **caractérisé en ce que** les éléments d'étanchéité (30, 31) possèdent un diamètre extérieur différent de celui des éléments d'entraînement (26, 27).

10. Dispositif (1) selon au moins une des revendications précédentes, **caractérisé en ce que** le premier élément de formation d'interstice (4) est constitué en tant que rouleau (5), pouvant être entraîné en rotation, en tant que rouleau stationnaire ou en tant que déversoir (45) stationnaire.

11. Dispositif (1) selon au moins une des revendications précédentes, **caractérisé en ce que** le premier élément de formation d'interstice (4) est constitué en tant que rouleau (5), pouvant être entraîné en rotation, avec un quatrième diamètre extérieur (6), le quatrième diamètre extérieur (6) étant plus petit que le deuxième diamètre extérieur (12) du deuxième élément de formation d'interstice (8).

12. Dispositif (1) selon au moins une des revendications précédentes, **caractérisé en ce que** le premier élément de formation d'interstice (4) est disposé au-dessus du deuxième élément de formation d'interstice (8).

13. Dispositif (1) selon au moins une des revendications précédentes, **caractérisé en ce que** le premier élément de formation d'interstice (4) est constitué en tant que rouleau (5), pouvant être entraîné en rotation, avec un quatrième diamètre extérieur (6), et présente dans ses deux zones extérieures axialement respectivement un élément d'entraînement (37, 38) tournant solidairement, avec un cinquième diamètre extérieur (41) plus grand comparé au quatrième diamètre extérieur (6).

14. Dispositif (1) selon au moins une des revendications précédentes, **caractérisé en ce que** le deuxième élément de formation d'interstice (8) présente, pour surmonter la différence entre le premier diamètre extérieur (11) du deuxième élément de formation d'interstice (8) et le deuxième diamètre extérieur (12) des éléments d'entraînement (26, 27), un élément de transfert (33) stationnaire destiné à transférer le tapis (2) sur un convoyeur à courroie (34) à partir du deuxième élément de formation d'interstice (8).
